# FASCICULE DE BREVET EUROPEEN

(11) **EP 1 711 384 B1**
(45) Date de publication et mention de la délivrance du brevet: **03.09.2008**
(21) Numéro de dépôt: 05701308.8
(22) Date de dépôt: 02.02.2005
(51) Int. Cl.: B60S 1/16, H02K 5/22

(54) **MOTO-REDUCTEUR NOTAMMENT POUR MECANISME D'ESSUIE-GLACE DE VEHICULE AUTOMOBILE**
GETRIEBEMOTOR, INSBESONDERE FÜR EINEN KRAFTFAHRZEUG-WISCHERMECHANISMUS
GEAR MOTOR IN PARTICULAR FOR MOTOR VEHICLE WIPER MECHANISM

(30) Priorité: 06.02.2004 FR 0401195
(43) Date de publication de la demande: 18.10.2006
(73) Titulaire: VALEO SYSTEMES D'ESSUYAGE, 78321 La Verrière (FR)
(72) Inventeur: MACAIRE, Franck, F-92160 Antony (FR)
(86) Numéro de dépôt international: PCT/EP2005/001026
(87) Numéro de publication internationale: WO 2005/075266

(56) Documents cités:
- DE-U- 20 004 338
- FR-A- 2 841 702
- US-A- 5 218 255
- US-A- 5 864 188
- US-A1- 2003 109 149

## Description

La présente invention concerne un moto-réducteur, c'est-à-dire un dispositif essentiellement composé d'un moteur électrique auquel est couplé un réducteur chargé d'en démultiplier la vitesse.

L'invention trouve une application particulièrement avantageuse, mais non exclusive, dans le domaine des mécanismes d'essuie-glaces pour véhicules automobiles.

Un moto-réducteur comporte un nombre plus ou moins grand de composants électriques. Parallèlement aux indispensables moteur électrique et connecteur d'alimentation, on trouve en outre de plus en plus souvent une carte électronique permettant de gérer précisément le fonctionnement du moto-réducteur, un ou plusieurs capteurs de position et/ou de vitesse, etc. Il est à noter que pour l'ensemble de ce texte, la notion de composants électriques concerne aussi bien les dispositifs électriques au sens strict du terme, que les dispositifs électroniques considérés simplement comme des systèmes techniquement plus évolués.

Quoi qu'il en soit, il est connu de relier électriquement les différents composants électriques d'un moto-réducteur en soudant des fils conducteurs et/ou des pistes conductrices entre leurs bornes de connexion respectives. Cependant, cette solution tend peu à peu à disparaître aujourd'hui, en raison essentiellement de son caractère peu écologique lié à l'utilisation de métaux lourds particulièrement nocifs pour l'environnement.

Pour remédier à cette difficulté, on a désormais communément recours à des boîtiers de connexion généralement amovibles, dans lesquels sont solidarisées des pistes conductrices dont les extrémités sont à même de venir s'assembler de manière réversible avec les bornes de connexion des différents composants électriques du moto-réducteur.

Ce type de connectique présente toutefois l'inconvénient d'être d'un prix de revient élevé car elle nécessite avant tout la présence d'une pièce supplémentaire et par ailleurs relativement volumineuse, à savoir le boîtier de connexion.

Elle requiert également des pistes de formes complexes et/ou des connecteurs spécifiques au niveau des zones de jonction entre pistes conductrices et bornes de connexion, afin de pouvoir réaliser la fonction d'emboîtement réversible inhérente au caractéristique amovible du boîtier. C'est ainsi que lorsque les extrémités des pistes conductrices se présentent sous la forme de fiches, l'utilisation de douilles onéreuses et encombrantes devient alors obligatoire. A contrario, lorsque ce sont les bornes de connexion des composants électriques qui sont constitués par des fiches, les extrémités des pistes conductrices sont généralement pliées en forme de lyres, ce qui impose de nombreuses opérations de pliage et/ou de découpage qui sont toujours compliquées à mettre en oeuvre. Le document US 52182 255A décrit un ① ① moto-réductevr selon le préambule de la revendication 1.

Aussi le problème technique à résoudre, par l'objet de la présente invention, est de proposer un moto-réducteur notamment pour mécanisme d'essuie-glace de véhicule automobile, comportant un carter support sur lequel sont montés un moteur électrique couplé à un réducteur, un carter de fermeture recouvrant le carter support, et des moyens de connexion reliant électriquement entre eux les différents composants électriques du moto-réducteur, moto-réducteur qui permettrait d'éviter les problèmes de l'état de la technique en offrant une connectique sensiblement moins onéreuse, tout en disposant d'une qualité de connexion optimale.

La solution au problème technique posé consiste, selon la présente invention, en ce que les moyens de connexion comportent au moins une piste conductrice qui est pourvue d'au moins une entaille apte à coopérer par emboîtement avec une fiche de connexion d'un des composants électriques du moto-réducteur, les portions de piste délimitant longitudinalement chaque entaille étant respectivement aptes à exercer une pression de contact par déformation élastique sur chaque face de la fiche de connexion associée.

L'invention telle qu'ainsi définie présente l'avantage de proposer des moyens de connexion qui sont d'un point de vue structurel considérablement plus simple que leurs homologues de l'état de la technique, et par conséquent beaucoup moins chers à réaliser.

En effet, le surmoulage des pistes conductrices à l'intérieur du carter de fermeture permet de s'affranchir de la pièce supplémentaire que constituait le boîtier de connexion. Il permet également d'adopter des profils de pistes conductrices relativement linéaires, donc faciles à fabriquer et à intégrer. Tout cela sous-entend bien sûr que le carter de fermeture est réalisé en matériau électriquement isolant, par exemple en plastique.

Le principe d'emboîtement employé pour relier chaque fiche de connexion et la piste conductrice qui lui est associée, ne nécessite par ailleurs aucun connecteur spécifique, pas plus que de complexes opérations de pliage et de découpage, cela contribue là encore à abaisser le coût des moyens de connexion.

Le surmoulage permet en outre une bien plus grande précision dans le positionnement relatif des pistes conductrices par rapport aux fiches de connexion des différents composants électriques du moto-réducteur, au bénéfice cette fois d'une meilleure qualité de connexion.

La précision inhérente au principe d'emboîtement utilisé pour réaliser les connexions, participe elle aussi à l'obtention d'une rigueur d'assemblage sensiblement améliorée entre pistes conductrices et fiches de connexion.

Il est à noter que si la simplicité formelle des pistes conductrices rend ces dernières particulièrement facile à surmouler, elle permet également et de manière particulièrement avantageuse de ne pas compliquer ni même interdire le démoulage du carter de fermeture une fois lesdites pistes conductrices intégrées.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre en perspective un moto-réducteur conforme à l'invention.
La figure 2 représente le moto-réducteur sans son carter de fermeture.
La figure 3 est une vue de dessous du carter de fermeture du moto-réducteur.
La figure 4 constitue une vue similaire à la figure 2, mais sur laquelle a également été représentée la carte électronique du moto-réducteur.
La figure 5 montre en détail la partie du moto-réducteur où sont implantées les fiches de connexion du moteur électrique.
La figure 6 fait apparaître en perspective un insert destiné à constituer les pistes conductrices vouées à relier électriquement la carte électronique et le moteur électrique.
La figure 7 illustre en perspective un insert destiné à constituer les pistes conductrices vouées à relier électriquement le connecteur électrique et la carte électronique.
La figure 8 représente les zones de contact entre les fiches de connexion du moteur électrique et leurs pistes conductrices d'alimentation.
La figure 9 montre en détail la partie du carter de fermeture qui supporte les extrémités des pistes conductrices destinées à alimenter le moteur électrique.
La figure 10 fait apparaître le positionnement relatif des fiches de connexion du moteur électrique par rapport à la partie du carter de fermeture qui est représentée à la figure 7.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

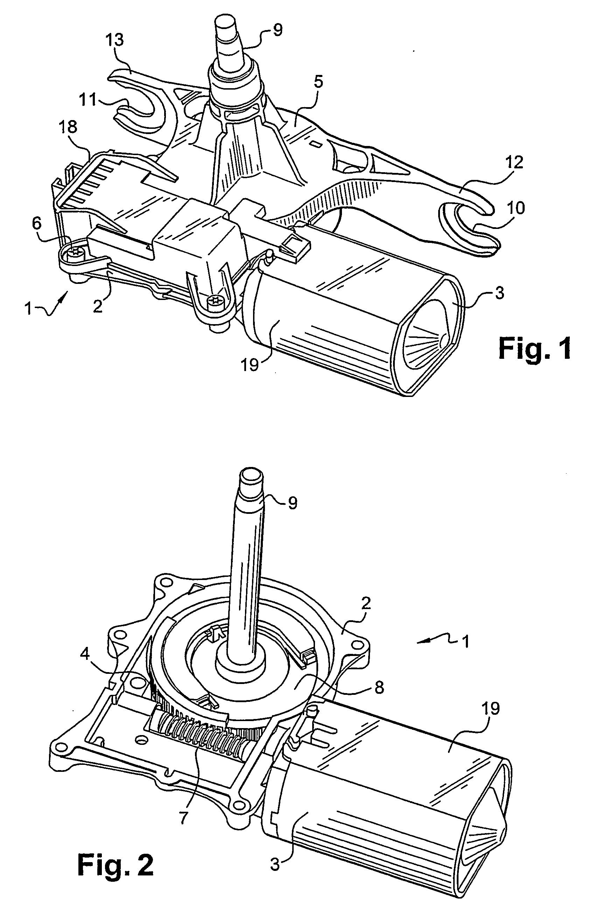

La figure 1 illustre un moto-réducteur 1 qui est destiné à équiper un dispositif d'essuie-glace de véhicule automobile. Ce type d'appareil étant parfaitement connu, son fonctionnement ne sera pas décrit en détail ici.

D'un point de vue purement structurel, le moto-réducteur 1 comporte classiquement un carter support 2 sur lequel sont montés un moteur électrique 3 couplé à un réducteur 4 chargé d'en démultiplier la vitesse. Le carter support 2 est recouvert d'un carter de fermeture 5 avec lequel il est solidarisé par l'intermédiaire de plusieurs vis d'assemblage 6.

Bien qu'il serve par ailleurs de socle d'ancrage pour le moteur électrique 3, le carter support 2 est avant tout destiné à supporter l'ensemble des composants internes du réducteur 4, ainsi qu'on peut le voir sur la figure 2. On remarque notamment la présence d'une vis sans fin 7 qui est en mesure d'être entraînée en rotation axiale directement par le moteur électrique 3, ainsi que d'une roue dentée 8 qui est solidaire d'un arbre de sortie 9 monté mobile en rotation suivant un axe sensiblement perpendiculaire à l'axe de rotation de la vis sans fin 7. L'ensemble est agencé de manière à ce que la vis sans fin 7 coopère par engrènement avec la roue dentée 8, de sorte que l'arbre de sortie 9 est en mesure d'être entraîné indirectement en rotation axiale par le moteur électrique 3.

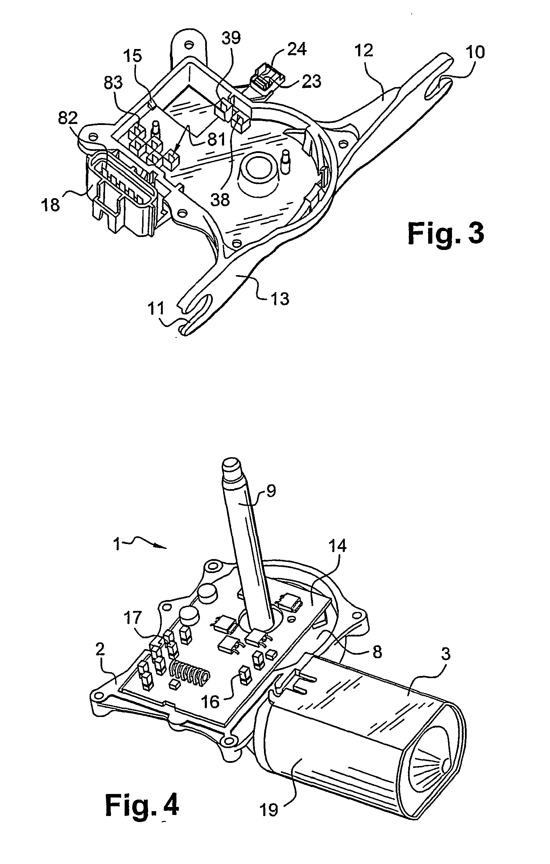

Outre un rôle d'élément de protection, le carter de fermeture 5 visible à la figure 3 a également pour fonction de servir de support pour la fixation du moto-réducteur 1 sur la carrosserie du véhicule automobile. A cet effet, deux logements 10, 11 sont ménagés sur deux pattes distinctes 12, 13 afin de recevoir de classiques amortisseurs de fixation non représentés ici pour d'évidentes raisons de clarté.

Dans ce mode particulier de réalisation, choisi uniquement à titre d'exemple, le moto-réducteur 1 est pourvu d'une carte électronique 14 qui est notamment chargée de gérer le courant entre ses différents composants électriques.

La figure 4 montre le positionnement de cette carte électronique 14 par rapport au carter support 2, bien que dans la pratique elle soit plutôt solidarisée de manière amovible à l'intérieur du carter de fermeture 5, au moyen d'un élément de blocage 15 élastiquement déformable. Cette représentation a en fait essentiellement pour but de faire apparaître les bornes de connexion 16, 17 de la carte électronique 14, qui se présentent toutes ici sous la forme de douilles.

La figure 3 montre également que le moto-réducteur 1 est pourvu d'un connecteur 18 qui est chargé de raccorder ses différents composants électriques à une source d'énergie et/ou de commande externe. De manière particulièrement avantageuse, ce connecteur électrique 18 est ici surmoulé directement à l'intérieur du carter de fermeture 5 avantageusement réalisé en plastique électriquement isolant.

Ainsi qu'on peut le voir partiellement sur cette même figure 3, le moto-réducteur 1 dispose en outre de moyens de connexion 20 qui sont à même de relier électriquement entre eux les différents composants électriques du moto-réducteur 1, c'est-à-dire dans le cas présent le connecteur 18, la carte électronique 14 et le moteur électrique 3.

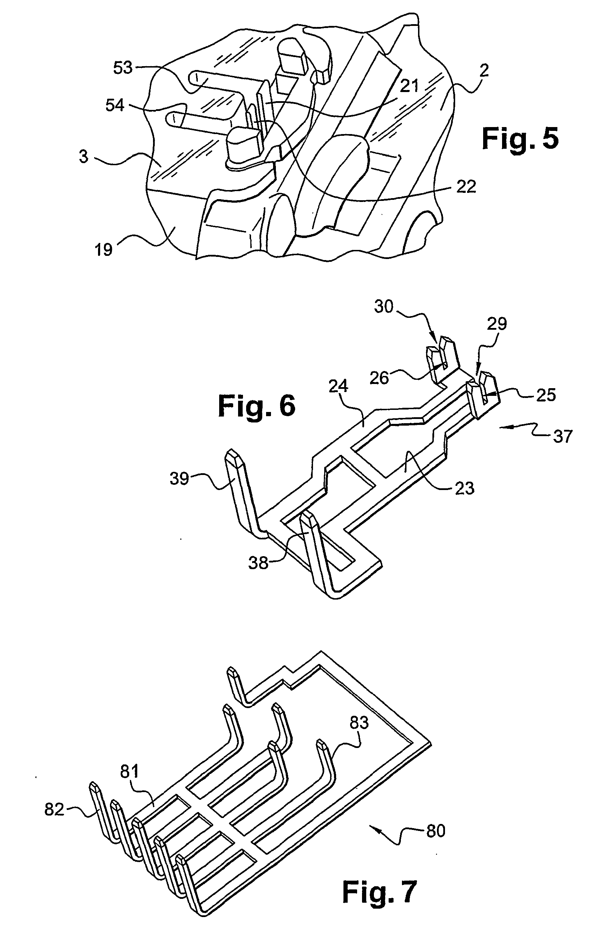

Conformément à la figure 5, le moteur électrique 3 est pourvu de deux fiches de connexion 21, 22, formant bornes d'alimentation. Ces dernières font plus particulièrement saillies du côté du carter de fermeture 5, au niveau du plan de joint situé entre la carcasse 19 du moteur électrique 3 et le carter support 2. Elles sont ainsi accessibles à la partie supérieure du moto-réducteur 1.

Conformément à l'objet de la présente invention, les moyens de connexion 20 de ce mode particulier de réalisation comportent deux pistes conductrices 23, 24 qui sont surmoulées dans le carter de fermeture 5, et qui disposent chacune d'une entaille 25, 26 apte à coopérer par emboîtement avec l'une des fiches de connexion 21, 22 du moteur électrique 3. Par ailleurs, les portions de piste 27a, 27b, 28a, 28b délimitant longitudinalement chaque entaille 25, 26 sont respectivement en mesure d'exercer une pression de contact par déformation élastique sur chaque face de la fiche de connexion 21, 22 associée.

La figure 6 fait d'ailleurs apparaître un premier insert 37 en matériau conducteur, qui est destiné à être intégré par surmoulage au matériau isolant du carter de fermeture 5, pour constituer une fois découpé les futures pistes conductrices 23, 24 partiellement visibles à la figure 3. On remarque que les extrémités 38, 39 présentent des formes classiques de simples fiches car elles sont destinées à venir se loger dans les douilles 16 de la carte électronique 14.

A titre de comparaison, la figure 7 montre quant à elle un second insert 80 en matériau conducteur, qui est également destiné à être intégré par surmoulage au matériau isolant du carter de fermeture 5. Mais l'optique est ici de constituer les futures pistes conductrices 81 chargées de relier électriquement le connecteur 18, via les extrémités 82, aux douilles 17 de la carte électronique 14, via les extrémités 83.

Selon une particularité de l'invention, la largeur minimale de chaque entaille 25, 26 est sensiblement inférieure à l'épaisseur de la fiche de connexion 21, 22 associée. Combinée à l'élasticité intrinsèque du matériau constituant chaque piste conductrice 23, 24, cette caractéristique permet de générer la pression nécessaire pour garantir le contact entre chaque portion de piste 27a, 27b, 28a, 28b et la face de la fiche de connexion 21, 22 correspondante.

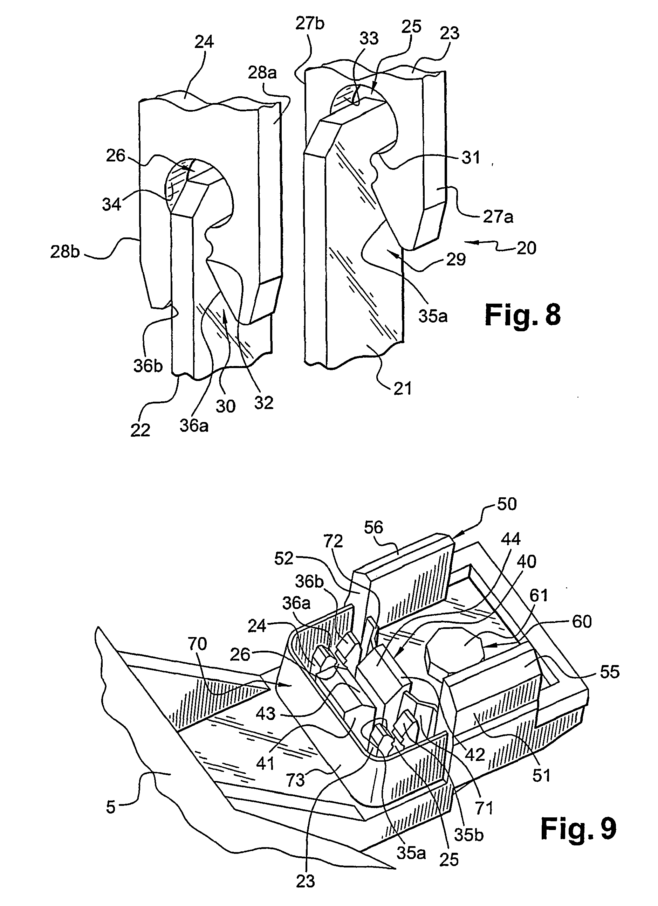

Conformément à la figure 8, chaque entaille 25, 26 est ménagée à travers la piste conductrice 23, 24 de manière sensiblement perpendiculaire aux faces de cette dernière. Chaque entaille 25, 26 est par ailleurs dotée d'une ouverture 29, 30, dite latérale, qui débouche au niveau du bord latéral de la piste conductrice 23, 24. Cette caractéristique implique que l'emboîtement de chaque fiche de connexion 21, 22 avec son entaille 25, 26 s'effectue suivant des plans sensiblement orthogonaux.

Dans cet exemple de réalisation, chaque entaille 25, 26 est en outre ménagée longitudinalement à une extrémité de la piste conductrice 23, 24 et son ouverture latérale 29, 30 débouche au niveau de la partie la plus distale de ladite extrémité de piste.

Ainsi qu'on peut le voir toujours sur cette figure 8, la paroi délimitant chaque entaille 25, 26 est pourvue de quatre portions convexes 31, 32 qui sont à même de coopérer par contact avec la fiche de connexion 21, 22 associée. Cela signifie en d'autres termes que la section transversale de chaque entaille 25, 26 n'est pas constante, et qu'il existe des portions de paroi saillantes qui sont en mesure de garantir le contact avec la face correspondante de la fiche de connexion 21, 22 associée, même si ce contact n'est que local.

On observe également que la portion de paroi délimitant le fond 33, 34 de chaque entaille 25, 26 présente un profil arrondi, et de préférence sensiblement circulaire. Cette caractéristique permet d'accroître la résistance à la déchirure de chaque piste conductrice 23, 24 dans une zone où les tensions mécaniques peuvent devenir relativement élevées. C'est précisément le cas lorsque les portions de pistes 27a, 27b, 28a, 28b s'écartent suite à l'insertion d'une fiche de connexion 21, 22 dans l'entaille 25, 26 correspondante.

On remarque en outre que chaque portion de paroi délimitant l'ouverture latérale 29, 30 à l'intérieur d'une entaille 25, 26 est dotée d'un chanfrein 35a, 35b, 36a, 36b permettant de faciliter l'insertion de la fiche de connexion 21, 22 associée. Au final, chaque entaille 25, 26 présente sensiblement une forme de trou de serrure.

Conformément à la figure 9, le moto-réducteur 1 dispose de moyens de guidage 40 qui sont en mesure de guider l'emboîtement de chaque fiche de connexion 21, 22 dans l'entaille correspondante 25, 26 de la piste conductrice 23, 24 associée. Cette caractéristique permet de garantir une connexion effective lors d'un rapprochement relatif axial entre une fiche de connexion 21, 22 et son entaille 25, 26, même si il n'y a pas une colinéarité parfaite.

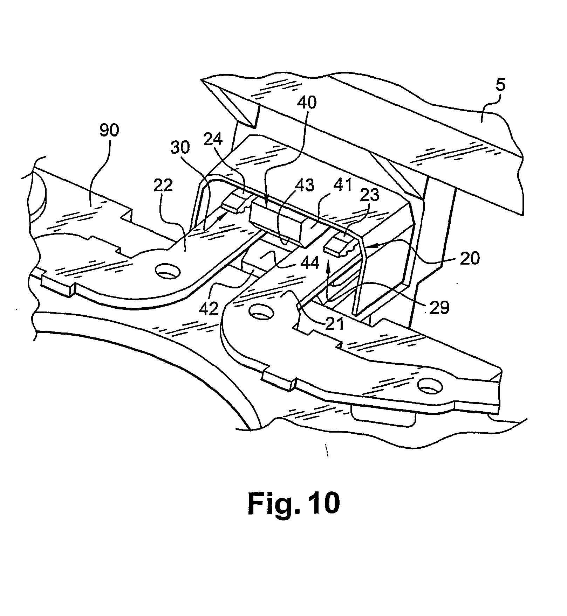

Selon une particularité de l'invention, les moyens de guidage 40 d'une même fiche de connexion 21, 22 comportent deux éléments saillants 41, 42 qui sont solidaires du carter de fermeture 5. Conformément à la figure 10, ces deux éléments saillants 41, 42 sont par ailleurs respectivement à même de coopérer par glissement avec un bord de chaque face de la fiche de connexion 21, 22, simultanément à l'engagement axial de ladite fiche de connexion 21, 22 dans l'entaille correspondante 25, 26 de la piste conductrice 23, 24 associée.

Ainsi qu'on peut le voir aux figures 9 et 10, les deux éléments de guidage 41, 42 d'une même fiche de connexion 21, 22 sont positionnés en vis-à-vis l'un de l'autre, à une distance correspondant sensiblement à l'épaisseur de ladite fiche de connexion 21, 22, et à proximité de l'entaille correspondante 25, 26 de la piste conductrice 23, 24 associée. L'espace compris entre les deux éléments de guidage 41, 42 s'étend alors en regard de l'entaille 25, 26, de sorte que l'un des bords longitudinaux de la fiche de connexion 21, 22 est susceptible de s'y engager lors d'une connexion. Les faces en vis-à-vis des deux éléments de guidage 41, 42 sont alors respectivement en mesure de coopérer par contact glissant avec le bord interne de chaque face de la fiche de connexion 21, 22.

De manière particulièrement avantageuse, chaque élément de guidage 41, 42 d'une même fiche de connexion 21, 22 est pourvu en partie distale d'un chanfrein 43, 44 qui est ménagé face à l'autre élément de guidage 41, 42. Chacun de ces chanfreins 43, 44 est par ailleurs à même de guider l'insertion d'un bord de la fiche de connexion 21, 22 entre lesdits éléments de guidage 41, 42, simultanément à l'engagement axial de ladite fiche de connexion 21, 22 dans l'entaille correspondante 25, 26 de la piste conductrice 23, 24 associée.

Dans ce mode particulier de réalisation, les deux éléments de guidage 41, 42 sont positionnés entre les deux pistes conductrices 23, 24, et sont aptes à guider simultanément les emboîtements des deux fiches de connexion 21, 22 du moteur électrique 3 dans les entailles 25, 26 qui leurs sont respectivement associées. Cela signifie que les deux éléments de guidages 41, 42 sont simultanément en mesure de coopérer par contact glissant avec les deux fiches de connexion 21, 22.

La figure 9 montre également que le moto-réducteur 1 est doté de moyens de positionnement 50 permettant de positionner, avant leur emboîtement, chaque entaille 25, 26 de piste conductrice 23, 24 en regard de la fiche de connexion 21, 22 correspondante. Comme il est monté le long de l'arbre de sortie 9, la carter de fermeture 5 peut à priori tourner autour de cet axe. Il est donc important de bien le positionner angulairement avant de vouloir interconnecter les pistes conductrices 23, 24 aux fiches de connexion 21, 22, pour être sûr de ne pas avoir ultérieurement de problèmes de connexion. Ce pré-positionnement consiste concrètement à disposer les entailles 25, 26 à l'aplomb mais à distance des fiches de connexion 21, 22.

Selon une particularité de l'invention, les moyens de positionnement 50 sont pourvus d'au moins un élément saillant 51, 52 qui est solidaire du carter de fermeture 5, et qui est à même de coopérer par emboîtement avec une encoche 53, 54 de forme sensiblement complémentaire, ménagée dans un des autres éléments constitutifs du moto-réducteur 1 (figure 5). On pense ici au moteur électrique 3 ou au carter support 2.

De manière particulièrement avantageuse, chaque élément de positionnement 51, 52 dispose d'au moins un chanfrein 55, 56 qui est ménagé à son extrémité distale et qui est apte à faciliter son insertion dans l'encoche 53, 54 correspondante.

Dans ce mode particulier de réalisation, les moyens de positionnement 50 comportent deux éléments de positionnement 51, 52 qui sont respectivement aptes à coopérer par emboîtement avec deux encoches 53, 54 de formes sensiblement complémentaires, ménagées à travers la carcasse 19 du moteur électrique 3.

La figure 9 montre par ailleurs que le moto-réducteur 1 dispose de moyens de butée 60 qui sont en mesure de bloquer l'insertion de chaque fiche de connexion 21, 22 dans l'entaille correspondante 25, 26 de la piste conductrice 23, 24 associée, lorsque l'extrémité distale de ladite fiche de connexion 21, 22 arrive à proximité du fond 33, 34 de ladite entaille 25, 26. Cette caractéristique permet de limiter l'emboîtement relatif entre les deux parties de chaque connexion, et ainsi d'empêcher que la fiche 21, 22 ne vienne en butée au fond de l'entaille 25, 26. Le but est d'éviter toute déformation susceptible d'entraîner une perte de contact électrique, que ladite déformation apparaisse au niveau de la fiche de connexion 21, 22 ou de l'entaille 25, 26.

Selon une particularité de l'invention, les moyens de butée 60 sont dotés d'au moins un plot saillant 61 qui est solidaire du carter de fermeture 5, et qui est à même de coopérer par contact bloquant avec un des autres éléments constitutifs du moto-réducteur, comme par exemple le moteur électrique 3 ou le carter support 2.

Dans ce mode particulier de réalisation, les moyens de butée 60 comportent un unique plot 61 qui fait saillie entre les deux éléments de positionnement 51, 52. Ce plot 61 est par ailleurs en mesure de coopérer par contact bloquant avec la zone de la carcasse 19 du moteur électrique 3 qui est située entre les deux encoches 53, 54 destinées à recevoir lesdits éléments de positionnement 51, 52.

La figure 9 montre en outre que le moto-réducteur 1 est pourvu de moyens d'isolation 70 qui sont aptes à isoler électriquement chaque connexion que constitue l'emboîtement d'une fiche de connexion 21, 22 dans une entaille 25, 26 de piste conductrice 23, 24, par rapport aux autres éléments conducteurs du moto-réducteur 1. On pense avant tout ici à la carcasse métallique 19 du moteur électrique 3. Quoi qu'il en soit, cette caractéristique a pour but éviter la formation d'arcs électriques entre chaque connexion et son environnement métallique direct.

Selon une particularité de l'invention, les moyens d'isolation 70 disposent d'au moins une paroi électriquement isolante 71, 72, 73 qui est solidaire du carter de fermeture 5 et qui forme un écran continu autour d'au moins une portion de piste conductrice 23, 24 supportant une entaille 25, 26.

Dans ce mode particulier de réalisation, les moyens d'isolation 70 comportent une première paroi électriquement isolante 71 qui joint l'élément de positionnement 51 à l'élément de guidage 42, une seconde paroi électriquement isolante 72 qui raccorde ce même élément de guidage 42 à l'élément de positionnement 52, ainsi qu'une troisième paroi électriquement isolante 73 qui relie ensemble lesdits éléments de positionnement 51, 52 en contournant les deux portions pistes conductrices 23, 24 supportant respectivement les deux entailles 25, 26.

De manière particulièrement avantageuse, les moyens d'isolation 70 sont en outre à même de protéger l'intégrité de chaque portion de piste conductrice 23, 24 supportant une entaille 25, 26.

Ainsi qu'on peut le voir dans l'exemple de réalisation de la figure 10, les fiches de connexion 21, 22 du moteur électrique 3 sont montés sur un support 90 en bakélite qui est solidarisé à l'intérieur de la carcasse 19 et qui est communément appelé plaquette porte charbons. A cet égard, il est à noter qu'un support en plastique pourrait être utilisé de manière équivalente.

Bien entendu, l'invention concerne également tout dispositif d'essuie-glace comportant au moins un moto-réducteur 1 tel que précédemment décrit. Il est à noter que dans ce type d'application, un moto-réducteur conforme à l'invention peut équiper indifféremment un dispositif d'essuie-glace arrière ou avant.

L'invention peut cependant être appliquée à d'autres domaines que l'essuyage. D'ailleurs, l'invention concerne en outre et plus généralement tout véhicule automobile doté d'au moins un moto-réducteur tel que précédemment décrit.

## Revendications

1. Moto-réducteur (1) notamment pour mécanisme d'essuie-glace de véhicule automobile, comportant un carter support (2) sur lequel sont montés un moteur électrique (3) couplé à un réducteur (4), un carter de fermeture (5) recouvrant le carter support (2), et des moyens de connexion (20) reliant électriquement entre eux les différents composants électriques du moto-réducteur (1), les moyens de connexion (20) comportant au moins une piste conductrice (23, 24) qui est surmoulée à l'intérieur du carter de fermeture (5), **caractérisé en ce que** le piste est pourvue d'au moins une entaille (25, 26) apte à coopérer par emboîtement avec une fiche de connexion (21, 22) d'un des composants électriques du moto-réducteur (1), les portions de piste (27a, 27b, 28a, 28b) délimitant longitudinalement chaque entaille (25, 26) étant respectivement aptes à exercer une pression de contact par déformation élastique sur chaque face de la fiche de connexion (21, 22) associée.

2. Moto-réducteur (1) selon la revendication 1, **caractérisé en ce que** la largeur minimale de chaque entaille (25, 26) est sensiblement inférieure à l'épaisseur de la fiche de connexion (21, 22) associée.

3. Moto-réducteur (1) selon l'une des revendications 1 ou 2, **caractérisé en ce que** chaque entaille (25, 26) est ménagée à travers la piste conductrice (23, 24) de manière sensiblement perpendiculaire aux faces de ladite piste, et comporte une ouverture (29, 30) dite latérale qui débouche au niveau du bord latéral de ladite piste conductrice (23, 24).

4. Moto-réducteur (1) selon l'une quelconque des revendications 1 à 3, **caractérisé en ce que** chaque entaille (25, 26) est ménagée longitudinalement à une extrémité de la piste conductrice (23, 24), et **en ce que** son ouverture latérale (29, 30) débouche au niveau de la partie la plus distale de ladite extrémité de piste.

5. Moto-réducteur (1) selon l'une quelconque des revendications 1 à 4, **caractérisé en ce que** la paroi délimitant chaque entaille (25, 26) comporte au moins une portion convexe (31, 32) apte à coopérer par contact avec la fiche de connexion (21, 22) associée.

6. Moto-réducteur (1) selon l'une quelconque des revendications 1 à 5, **caractérisé en ce que** la portion de paroi délimitant le fond (33, 34) de l'entaille (25, 26) présente un profil arrondi, de préférence sensiblement circulaire.

7. Moto-réducteur (1) selon l'une quelconque des revendications 1 à 6, **caractérisé en ce que** chaque portion de paroi délimitant l'ouverture latérale (29, 30) à l'intérieur d'une entaille (25, 26) comporte un chanfrein (35a, 35b, 36a, 36b) apte à faciliter l'insertion de la fiche de connexion (21, 22) associée.

8. Moto-réducteur (1) selon l'une quelconque des revendications 1 à 7, **caractérisé en ce qu'**il comporte des moyens de guidage (40) aptes à guider l'emboîtement de chaque fiche de connexion (21, 22) dans l'entaille correspondante (25, 26) de la piste conductrice (23, 24) associée.

9. Moto-réducteur (1) selon la revendication 8, **caractérisé en ce que** les moyens de guidage (40) d'une même fiche de connexion (21, 22) comportent deux éléments saillants (41, 42) qui sont solidaires du carter de fermeture (5), et qui sont respectivement aptes à coopérer par glissement avec un bord de chaque face de la fiche de connexion (21, 22), simultanément à l'engagement axial de ladite fiche de connexion (21, 22) dans l'entaille correspondante (25, 26) de la piste conductrice (23, 24) associée.

10. Moto-réducteur (1) selon la revendication 9, **caractérisé en ce que** les deux éléments de guidage (41, 42) d'une même fiche de connexion (21, 22) sont positionnés en vis-à-vis l'un de l'autre, à une distance correspondant sensiblement à l'épaisseur de ladite fiche de connexion (21, 22), et à proximité de l'entaille correspondante (25, 26) de la piste conductrice (23, 24) associée, l'espace compris entre lesdits éléments de guidage (41, 42) s'étendant en regard de ladite entaille (25, 26).

11. Moto-réducteur (1) selon l'une des revendications 9 ou 10, **caractérisé en ce que** chaque élément de guidage (41, 42) d'une même fiche de connexion (21, 22) comporte en partie distale un chanfrein (43, 44) qui est ménagé face à l'autre élément de guidage (41, 42), et qui est apte à guider l'insertion d'un bord de la fiche de connexion (21, 22) entre lesdits éléments de guidage (41, 42), simultanément à l'engagement axial de ladite fiche de connexion (21, 22) dans l'entaille correspondante (25, 26) de la piste conductrice (23, 24) associée.

12. Moto-réducteur (1) selon l'une quelconque des revendications 1 à 11, **caractérisé en ce qu'**il comporte des moyens de positionnement (50) aptes à positionner, avant leur emboîtement, chaque entaille (25, 26) de piste conductrice (23, 24) en regard de la fiche de connexion (21, 22) correspondante.

13. Moto-réducteur (1) selon la revendication 12, **caractérisé en ce que** les moyens de positionnement (50) comportent au moins un élément saillant (51, 52) qui est solidaire du carter de fermeture (5), et qui apte à coopérer par emboîtement avec une encoche (53, 54) de forme sensiblement complémentaire, ménagée dans un des autres éléments constitutifs du moto-réducteur (1).

14. Moto-réducteur (1) selon la revendication 13, **caractérisé en ce que** chaque élément de positionnement (51, 52) comporte au moins un chanfrein (55, 56) qui est ménagé à son extrémité distale, et qui est apte à faciliter son insertion dans l'encoche (53, 54) correspondante.

15. Moto-réducteur (1) selon l'une quelconque des revendications 1 à 14, **caractérisé en ce qu'**il comporte des moyens de butée (60) aptes à bloquer l'insertion de chaque fiche de connexion (21, 22) dans l'entaille correspondante (25, 26) de la piste conductrice (23, 24) associée, lorsque l'extrémité distale de ladite fiche de connexion (21, 22) arrive à proximité du fond (33, 34) de ladite entaille (25, 26).

16. Moto-réducteur (1) selon la revendication 15, **caractérisé en ce que** les moyens de butée (60) comportent au moins un plot saillant (61) qui est solidaire du carter de fermeture (5), et qui est apte à coopérer par contact bloquant avec un des autres éléments constitutifs du moto-réducteur (1).

17. Moto-réducteur (1) selon l'une quelconque des revendications 1 à 16, **caractérisé en ce qu'**il comporte des moyens d'isolation (70) aptes à isoler électriquement chaque connexion que constitue l'emboîtement d'une fiche de connexion (21, 22) dans une entaille (25, 26) de piste conductrice (23, 24), par rapport aux autres éléments conducteurs du moto-réducteur (1).

18. Moto-réducteur (1) selon la revendication 17, **caractérisé en ce que** les moyens d'isolation (70) comportent au moins une paroi électriquement isolante (71, 72, 73) qui est solidaire du carter de fermeture (5) et qui forme un écran continu autour d'au moins une portion de piste conductrice (23, 24) supportant une entaille (25, 26).

19. Moto-réducteur (1) selon l'une des revendications 17 ou 18, **caractérisé en ce que** les moyens d'isolation (70) sont en outre aptes à protéger l'intégrité de chaque portion de piste conductrice (23, 24) supportant une entaille (25, 26).

20. Moto-réducteur (1) selon l'une quelconque des revendications 1 à 19, **caractérisé en ce que** le moteur électrique (3) est pourvu de deux fiches de connexion (21, 22) formant bornes d'alimentation, et **en ce que** les moyens de connexion (20) comportent deux pistes conductrices (23, 24) qui sont surmoulées dans le carter de fermeture (5) et qui disposent chacune d'une entaille (25, 26) apte à coopérer par emboîtement avec l'une desdites fiches de connexion (21, 22).

21. Moto-réducteur (1) selon l'une quelconque des revendications 8 à 20, **caractérisé en ce que** les moyens de guidage (40) comportent deux éléments de guidage (41, 42) qui sont positionnés entre les deux pistes conductrices (23, 24), et qui sont aptes à guider simultanément les emboîtements des deux fiches de connexion (21, 22) du moteur électrique (3) dans les entailles (25, 26) desdites pistes (23, 24) qui leurs sont respectivement associées.

22. Moto-réducteur (1) selon l'une quelconque des revendications 12 à 21, **caractérisé en ce que** les moyens de positionnement (50) comportent deux éléments de positionnement (51, 52) qui sont respectivement aptes à coopérer par emboîtement avec deux encoches (53, 54) de formes sensiblement complémentaires, ménagées à travers la carcasse (19) du moteur électrique (3).

23. Moto-réducteur (1) selon l'une quelconque des revendications 15 à 22, **caractérisé en ce que** les moyens de butée (60) comportent un plot (61) qui fait saillie entre les deux éléments de positionnement (51, 52) et qui est apte à coopérer par contact bloquant avec la zone de la carcasse (19) du moteur électrique (3) qui est située entre les deux encoches (53, 54) destinées à recevoir lesdits éléments de positionnement (51, 52).

24. Moto-réducteur (1) selon l'une quelconque des revendications 1 à 23, **caractérisé en ce que** le carter de fermeture (5) est réalisé en matériau électriquement isolant.

25. Dispositif d'essuie-glace, **caractérisé en ce qu'**il comporte au moins un moto-réducteur (1) selon l'une quelconque des revendications précédentes.

26. Véhicule automobile, **caractérisé en ce qu'**il comporte au moins un moto-réducteur (1) selon l'une quelconque des revendications 1 à 24.

## Claims

1. A gear motor (1) in particular for a motor vehicle windscreen wiper mechanism, comprising a support housing (2) whereon are mounted an electric motor (3) coupled to a reduction gear (4), a closure housing (5) covering the support housing (2), and connection means (20) electrically connecting with one another the various electrical components of the gear motor (1), the connection means (20) will comprise at least one conductor track (23, 24) which is overmoulded inside the closure housing (5), **characterised in that** the track is provided with at least one indentation (25, 26) suitable for engaging by interlocking with a connection plug (21, 22) of one of the electrical components of the gear motor (1), the track portions (27a, 27b, 28a, 28b) longitudinally defining each indentation (25, 26) being respectively suitable for exerting a contact pressure by elastic deformation on each surface of the associated connection plug (21, 22).

2. A gear motor (1) according to claim 1, **characterised in that** the minimum width of each indentation (25, 26) is substantially less than the thickness of the associated connection plug (21, 22).

3. A gear motor (1) according to one of claims 1 or 2, **characterised in that** each indentation (25, 26) is arranged through the conductor track (29, 30) substantially perpendicularly to the surfaces of said track, and comprises a "side" opening (29, 30) which emerges at the level of the side edge of said conductor track (23, 24).

4. A gear motor (1) according to any one of claims 1 to 3, **characterised in that** each indentation (25, 26) is arranged longitudinally at one end of the conductor track (23, 24), and **in that** the side opening (29, 30) thereof emerges at the level of the portion the most distal from said track end.

5. A gear motor (1) according to any one of claims 1 to 4, **characterised in that** the wall defining each indentation (25, 26) comprises at least one convex portion (31, 32) suitable for engaging by contact with the associated connection plug (21, 22).

6. A gear motor (1) according to any one of claims 1 to 5, **characterised in that** the wall portion defining the base (33, 34) of the indentation (25, 26) has a rounded, preferably substantially circular, profile.

7. A gear motor (1) according to any one of claims 1 to 6, **characterised in that** each wall portion defining the side opening (29, 30) inside an indentation (25, 26) comprises a bevel (35a, 35b, 36a, 36b) suitable for facilitating insertion of the associated connection plug (21, 22).

8. A gear motor (1) according to any one of claims 1 to 7, **characterised in that** it comprises guide means (40) suitable for guiding the interlocking of each connection plug (21, 22) into the corresponding indentation (25, 26) of the associated conductor track (23, 24).

9. A gear motor (1) according to claim 8, **characterised in that** the means (40) for guiding a same connection plug (21, 22) comprise two projecting elements (41, 42) which are rigidly connected to the closure housing (5), and which are respectively suitable for engaging by sliding with an edge of each surface of the connection plug (21, 22), simultaneously with the axial engagement of said connection plug (21, 22) into the corresponding indentation (25, 26) of the associated conductor track (23, 24).

10. A gear motor (1) according to claim 9, **characterised in that** the two elements (41, 42) for guiding a same connection plug (21, 22) are positioned facing each other, at a distance substantially corresponding to the thickness of said connection plug (21, 22), and in the vicinity of the corresponding indentation (25, 26) of the associated conductor track (23, 24), the space between said guide elements (41, 42) extending facing said indentation (25, 26).

11. A gear motor (1) according to claims 9 or 10, **characterised in that** each element (41, 42) for guiding a same connection plug (21, 22) comprises in the distal portion a bevel (43, 44) which is arranged facing the other guide element (41, 42), and which is suitable for guiding insertion of an edge of the connection plug (21, 22) between said guide elements (41, 42), simultaneously with the axial engagement of said connection plug (21, 22) in the corresponding indentation (25, 26) of the associated conductor track (23, 24).

12. A gear motor (1) according to any one of claims 1 to 11, **characterised in that** it comprises positioning means (50) suitable for positioning, before the interlocking thereof, each conductor track (23, 24) indentation (25, 26) facing the corresponding connection plug (21, 22).

13. A gear motor (1) according to claim 12, **characterised in that** the positioning means (50) comprise at least one projecting element (51, 52) which is rigidly connected to the closure housing (5), and which is suitable for engaging by interlocking with a slot (53, 54) of substantially complementary shape, arranged in one of the other component elements of the gear motor (1).

14. A gear motor (1) according to claim 13, **characterised in that** each positioning element (51, 52) comprises at least one bevel (55, 56) which is arranged at the distal end thereof, and which is suitable for facilitating the insertion thereof into the corresponding slot (53, 54).

15. A gear motor (1) according to any one of claims 1 to 14, **characterised in that** it comprises abutment means (60) suitable for blocking insertion of each connection plug (21, 22) into the corresponding indentation (25, 26) of the associated conductor track (23, 24), when the distal end of said connection plug (21, 22) reaches the vicinity of the base (33, 34) of said indentation (25, 26).

16. A gear motor (1) according to claim 15, **characterised in that** the abutment means (60) comprise at least one projecting stud (61) which is rigidly connected to the closure housing (5), and which is suitable for engaging by blocking contact with one of the other component elements of the gear motor (1).

17. A gear motor (1) according to any one of claims 1 to 16, **characterised in that** it comprises insulation means (70) suitable for electrically insulating each connection constituted by the interlocking of a connection plug (21, 22) into an indentation (25, 26) of a conductor track (23, 24) in relation to the other conductive elements of the gear motor (1).

18. A gear motor (1) according to claim 17, **characterised in that** the insulation means (70) comprise at least one electrically insulating wall (71, 72, 73) which is rigidly connected to the closure housing (5), and which forms a continuous screen around at least one portion of conductive track (23, 24) supporting an indentation (25, 26).

19. A gear motor (1) according to one of claims 17 or 18, **characterised in that** the insulation means (70) are further suitable for protecting the integrity of each portion of conductor track (23, 24) supporting an indentation (25, 26).

20. A gear motor (1) according to any one of claims 1 to 19, **characterised in that** the electric motor (3) is provided with two connection plugs (21, 22) forming power supply terminals, and **in that** the connection means (20) comprise two conductor tracks (23, 24) which are overmoulded in the closure housing (5) and each of which has an indentation (25, 26) suitable for engaging by interlocking with one of said connection plugs (21, 22).

21. A gear motor (1) according to any one of claims 8 to 20, **characterised in that** the guide means (40) comprise two guide elements (41, 42) which are positioned between the two conductor tracks (23, 24), and which are suitable for simultaneously guiding the interlocking of the two connection plugs (21, 22) of the electric motor (3) into the indentations (25, 26) of said tracks (23, 24) which are respectively associated therewith.

22. A gear motor (1) according to any one of claims 12 to 21, **characterised in that** the positioning means (50) comprise two positioning elements (51, 52 which are respectively suitable for engaging by interlocking with two slots (53, 54) of substantially complementary shapes, arranged through the housing (19) of the electric motor (3).

23. A gear motor (1) according to any one of claims 15 to 22, **characterised in that** the abutment means (60) comprise a stud (61) which projects between the two positioning elements (51, 52) and which is suitable for engaging by blocking contact with the area of the housing (19) of the electric motor (3) which is located between the two slots (53, 54) for receiving said positioning elements (51, 52).

24. A gear motor (1) according to any one of claims 1 to 23, **characterised in that** the closure housing (5) is made of an electrically insulating material.

25. A windscreen wiper device, **characterised in that** it comprises at least one gear motor (1) according to any one of the preceding claims.

26. A motor vehicle, **characterised in that** it comprises at least one gear motor (1) according to any one of claims 1 to 24.

## Patentansprüche

1. Getriebemotor (1) insbesondere für Wischermechanismus für Kraftfahrzeug mit einem Trägergehäuse (2), auf dem ein mit einem Untersetzungsgetriebe (4) gekoppelter Elektromotor (3), ein Verschlußgehäuse (5), der das Trägergehäuse (2) überdeckt, und Anschlußmittel (20) montiert sind, die die einzelnen elektrischen Komponenten des Elektromotors (1), die Anschlußmittel (20), die mindestens eine Leiterbahn (23, 24) umfaßt, die im Innern des Verschlußgehäuse (5) eingespritzt ist, elektrisch miteinander verbinden, **dadurch gekennzeichnet, daß** die Bahn mit mindestens einem Einschnitt (25, 26) versehen ist, der geeignet ist, durch Einstecken mit einem Anschlußstecker (21, 22) einer der elektrischen Komponenten des Getriebemotors (1) zusammenzuwirken, wobei Bahnabschnitte 27a, 27b, 28a, 28b), die jeden Einschnitt (25, 26) längs abgrenzen, jeweils geeignet sind, einen Kontaktdruck durch elastische Verformung auf jede Seite des zugehörigen Anschlußsteckers (21, 22) auszuüben.

2. Getriebemotor (1) nach Anspruch 1, **dadurch gekennzeichnet, daß** die Mindestbreite jedes Einschnitts (25, 26) deutlich geringer als die Dicke des zugehörigen Anschlußsteckers (21, 22) ist.

3. Getriebemotor (1) nach einem beliebigen der vorstehenden Ansprüche 1 oder 2, **dadurch gekennzeichnet, daß** jeder Einschnitt (25, 26) durch die Leiterbahn (23, 24) deutlich senkrecht zu den Seiten der besagten Bahn gestaltet ist und eine sogenannte seitliche Öffnung (29, 30) umfaßt, die zur Seitenkante der besagten Leiterbahn (23, 24) führt.

4. Getriebemotor (1) nach einem beliebigen der vorstehenden Ansprüche 1 bis 3, **dadurch gekennzeichnet, daß** jeder Einschnitt (25, 26) längs zu einem Ende der Leiterbahn (23, 24) gestaltet ist, und daß seine seitliche Öffnung (29, 30) zum entferntesten Teil des besagten Bahnendes führt.

5. Getriebemotor (1) nach einem beliebigen der vorstehenden Ansprüche 1 bis 4, **dadurch gekennzeichnet, daß** die jeden Einschnitt (25, 26) abgrenzende Wand mindestens einen konvexen Abschnitt (31, 32) umfaßt, der geeignet ist, durch Kontakt mit dem zugehörigen Anschlußstecker (21, 22) zusammenzuwirken.

6. Getriebemotor (1) nach einem beliebigen der vorstehenden Ansprüche 1 bis 5, **dadurch gekennzeichnet, daß** der Abschnitt der Wand, die den Boden (33, 34) des Einschnitts (25, 26) abgrenzt, ein abgerundetes, bevorzugterweise deutlich kreisförmiges Profil aufweist.

7. Getriebemotor (1) nach einem beliebigen der vorstehenden Ansprüche 1 bis 6, **dadurch gekennzeichnet, daß** jeder Abschnitt der Wand, der die seitliche Öffnung (29, 30) im Innern eines Einschnitts (25, 26) abgrenzt, eine Fase (35a, 35b, 36a, 36b) umfaßt, die geeignet ist, das Einsetzen des zugehörigen Anschlußsteckers (21, 22) zu vereinfachen.

8. Getriebemotor (1) nach einem beliebigen der vorstehenden Ansprüche 1 bis 7, **dadurch gekennzeichnet, daß** er Führungsmittel (40) umfaßt, die geeignet sind, das Einstecken jedes Anschlußsteckers (21, 22) in den entsprechenden Einschnitt (25, 26) der zugehörigen Leiterbahn (23, 24) zu führen.

9. Getriebemotor (1) nach Anspruch 8, **dadurch gekennzeichnet, daß** die Führungsmittel (40) eines gleichen Anschlußsteckers (21, 22) zwei vorspringende Elemente (41, 42) umfassen, die fest mit dem Verschlußgehäuse (5) verbunden und jeweils geeignet sind, durch Gleiten mit einer Kante jeder Seite des Anschlußsteckers (21, 22) zusammenzuwirken, und zwar gleichzeitig mit dem axialen Eingreifen des besagten Anschlußsteckers (21, 22) in den entsprechenden Einschnitt (25, 26) der zugehörigen Leiterbahn (23, 24).

10. Getriebemotor (1) nach Anspruch 9, **dadurch gekennzeichnet, daß** die beiden Führungselemente (41, 42) eines gleichen Anschlußsteckers (21, 22) gegenüber zueinander in einer Entfernung positioniert sind, die deutlich der Dicke des besagten Anschlußsteckers (21, 22) entspricht, und in der Nähe des entsprechenden Einschnitts (25, 26) der zugehörigen Leiterbahn (23, 24), wobei der zwischen den besagten Führungselementen (41, 42) inbegriffene Raum sich gegenüber dem besagten Einschnitt (25, 26) erstreckt.

11. Getriebemotor (1) nach einem beliebigen der vorstehenden Ansprüche 9 oder 10, **dadurch gekennzeichnet, daß** jedes Führungselement (41, 42) eines gleichen Anschlußsteckers (21, 22) am entfernten Teil eine Fase (43, 44) umfaßt, die gegenüber dem anderen Führungselement (41, 42) gestaltet ist, und die geeignet ist, das Einsetzen einer Kante des Anschlußsteckers (21, 22) zwischen die besagten Führungselemente (41, 42) zu führen, und zwar gleichzeitig mit dem axialen Eingreifen des besagten Anschlußsteckers (21, 22) in den entsprechenden Einschnitt (25, 26) der zugehörigen Leiterbahn (23, 24).

12. Getriebemotor (1) nach einem beliebigen der vorstehenden Ansprüche 1 bis 11, **dadurch gekennzeichnet, daß** er Positionierungsmittel (50) umfaßt, die geeignet sind, jeden Einschnitt (25, 26) einer Leiterbahn (23, 24) gegenüber dem entsprechenden Anschlußstecker (21, 22) vor ihrem Einstecken zu positionieren.

13. Getriebemotor (1) nach Anspruch 12, **dadurch gekennzeichnet, daß** die Positionierungsmittel (50) mindestens ein vorspringendes Element (51, 52) umfassen, das fest mit dem Verschlußgehäuse (5) verbunden ist, und das geeignet ist, durch Einstecken mit einer Kerbe (53, 54) mit deutlich ergänzender Form, die in einem der anderen Bestandselemente des Getriebemotor (1) gestaltet ist, zusammenzuwirken.

14. Getriebemotor (1) nach Anspruch 13, **dadurch gekennzeichnet, daß** jedes Positionierungselement (51, 52) mindestens eine Fase (55, 56) umfaßt, die an seinem entfernten Ende gestaltet ist, und die geeignet ist, sein Einfügen in die entsprechende Kerbe (53, 54) zu vereinfachen.

15. Getriebemotor (1) nach einem beliebigen der vorstehenden Ansprüche 1 bis 14, **dadurch gekennzeichnet, daß** er Anschlagmittel (60) umfaßt, die geeignet sind, das Einfügen jedes Anschlußsteckers (21, 22) in den entsprechenden Einschnitt (25, 26) der zugehörigen Leiterbahn (23, 24) zu sperren, wenn das entfernte Ende des besagten Anschlußsteckers (21, 22) in der Nähe des Bodens (33, 34) des besagten Einschnitts (25, 26) ankommt.

16. Getriebemotor (1) nach Anspruch 15, **dadurch gekennzeichnet, daß** die Anschlagmittel (60) mindestens einen vorspringenden Klotz (61) umfassen, der fest mit dem Verschlußgehäuse (5) verbunden ist, und der geeignet ist, durch Sperrkontakt mit einem der anderen Bestandselemente des Getriebemotors (1) zusammenzuwirken.

17. Getriebemotor (1) nach einem beliebigen der vorstehenden Ansprüche 1 bis 16, **dadurch gekennzeichnet, daß** er Isoliermittel (70) umfaßt, die geeignet sind, jeden Anschluß, den das Einstecken eines Anschlußsteckers (21, 22) in einen Einschnitt (25, 26) der zugehörigen Leiterbahn (23, 24) darstellt, gegenüber den anderen leitenden Elementen des Getriebemotors (1) elektrisch zu isolieren.

18. Getriebemotor (1) nach Anspruch 17, **dadurch gekennzeichnet, daß** die Isoliermittel (70) mindestens eine elektrisch isolierende Wand (71, 72, 73) umfassen, die fest mit dem Verschlußgehäuse (5) verbunden ist, und die einen kontinuierlichen Schirm um zumindest einen Abschnitt der Leiterbahn (23, 24) bildet, die einen Einschnitt (25, 26) trägt.

19. Getriebemotor (1) nach einem beliebigen der vorstehenden Ansprüche 17 oder 18, **dadurch gekennzeichnet, daß** die Isoliermittel (70) ferner geeignet sind, die Unversehrtheit jedes Abschnitts einer Leiterbahn (23, 24) zu schützen, die einen Einschnitt (25, 26) trägt.

20. Getriebemotor (1) nach einem beliebigen der vorstehenden Ansprüche 1 bis 19, **dadurch gekennzeichnet, daß** der Elektromotor (3) mit zwei Anschlußsteckern (21, 22) versehen ist, die Versorgungsklemmen bilden, und daß die Anschlußmittel (20) zwei Leiterbahnen (23, 24) umfassen, die im Verschlußgehäuse (5) eingespritzt sind, und die jeweils über einen Einschnitt (25, 26) verfügen, der geeignet ist, durch Einstecken mit einem der besagten Anschlußstecker (21, 22) zusammenzuwirken.

21. Getriebemotor (1) nach einem beliebigen der vorstehenden Ansprüche 8 bis 20, **dadurch gekennzeichnet, daß** die Führungsmittel (40) zwei Führungselemente (41, 42) umfassen, die zwischen den beiden Leiterbahnen (23, 24) positioniert sind, und die geeignet sind, gleichzeitig das Einstecken der beiden Anschlußstecker (21, 22) des Elektromotors (3) in die Einschnitte (25, 26) der besagten Bahnen (23, 24) zu führen, die ihnen jeweils zugeordnet sind.

22. Getriebemotor (1) nach einem beliebigen der vorstehenden Ansprüche 12 bis 21, **dadurch gekennzeichnet, daß** die Positionierungsmittel (50) zwei Positionierungselemente (51, 52) umfassen, die jeweils geeignet sind, durch Einstecken mit zwei Kerben (53, 54) mit deutlich ergänzenden Formen zusammenzuwirken, die durch das Motorgehäuse (19) des Elektromotors (3) gestaltet sind.

23. Getriebemotor (1) nach einem beliebigen der vorstehenden Ansprüche 15 bis 22, **dadurch gekennzeichnet, daß** die Anschlagmittel (60) einen Klotz (61) umfassen, der zwischen den beiden Positionierungsmitteln (51, 52) einen Vorsprung bildet, und der geeignet ist, durch Sperrkontakt mit der Zone des Motorgehäuses (19) des Elektromotors (3) zusammenzuwirken, die sich zwischen den beiden Kerben (53, 54) befindet, die zur Aufnahme der besagten Positionierungselemente (51, 52) bestimmt ist.

24. Getriebemotor (1) nach einem beliebigen der vorstehenden Ansprüche 1 bis 23, **dadurch gekennzeichnet, daß** das Verschlußgehäuse (5) aus elektrisch isolierendem Material ausgeführt ist.

25. Scheibenwischervorrichtung, **dadurch gekennzeichnet, daß** sie mindestens einen Getriebemotor (1) nach einem beliebigen der vorstehenden Ansprüche umfaßt.

26. Kraftfahrzeug, **dadurch gekennzeichnet, daß** es mindestens einen Getriebemotor (1) nach einem beliebigen der vorstehenden Ansprüche 1 bis 24 umfaßt.
